# FASCICULE DE BREVET EUROPEEN

(11) **EP 1 375 885 B1**
(45) Date de publication et mention de la délivrance du brevet: **01.08.2007**
(21) Numéro de dépôt: 03291414.5
(22) Date de dépôt: 13.06.2003
(51) Int. Cl.: F02D 41/34, F02D 41/14, F02D 41/02

(54) **Procédé de traitement des gaz d'échappement d'un moteur à combustion à essence**
Behandlungsverfahren der Abgase einer Otto-Brennkraftmaschine
Exhaust gas after-treatment method for a gasoline internal combustion engine

(30) Priorité: 20.06.2002 FR 0207621
(43) Date de publication de la demande: 02.01.2004
(73) Titulaire: RENAULT s.a.s., 92100 Boulogne Billancourt (FR)
(72) Inventeur: Batisson Saliou, Cathy, 78220 Viroflay (FR); Hodjati, Shahin, 75014 Paris (FR); Lazarevic, Dusan, 75015 Paris (FR)

(56) Documents cités:
- EP-A- 0 824 182
- WO-A-01/90541
- US-A- 5 517 820
- US-A- 5 661 971
- US-A- 6 122 910
- US-B1- 6 244 043

## Description

L'invention concerne un procédé de traitement des gaz d'échappement d'un moteur à combustion à essence.

L'invention concerne plus particulièrement un procédé de traitement des gaz d'échappement d'un véhicule automobile comportant un moteur à combustion à essence qui comporte plusieurs cylindres et une ligne d'échappement qui comporte, respectivement d'amont en aval, un piège à hydrocarbures et un catalyseur du type trifonctionnel.

Le procédé comporte une phase de montée en température du catalyseur jusqu'à une température de seuil déterminée au-delà de laquelle le catalyseur est en mesure de traiter efficacement la totalité des hydrocarbures émis en amont.

De façon à réduire les émissions de substances polluantes telles que notamment les oxydes d'azote, les hydrocarbures imbrûlés et les oxydes de carbone, les dispositifs d'échappement des moteur à essence sont équipés, de manière connue, de catalyseurs de type "trois voies", ou catalyseurs trifonctionnels, de façon à provoquer la réaction des substances polluantes qui les traversent, pour diminuer les émissions nocives.

De tels catalyseurs doivent fonctionner avec un mélange carburé dont le rapport entre la masse de carburant et la masse d'air est proche de la richesse stoechiométrique.

Dans le cadre des normes de dépollution de plus en plus sévères, on cherche à améliorer le traitement des hydrocarbures pendant la phase de montée en température du catalyseur trifonctionnel.

A cet effet, on agence dans le dispositif d'échappement un piège à hydrocarbures, en amont du catalyseur trifonctionnel. Ce piège stocke les hydrocarbures jusqu'à ce que sa température atteigne une valeur définie par conception, dite température de re-largage, à partir de laquelle il libère les hydrocarbures dans la ligne d'échappement.

Ces hydrocarbures libérés par le piège doivent ensuite être traités par le catalyseur trifonctionnel placé en aval du piège, ou directement par l'élément de catalyseur trifonctionnel du piège, lorsque l'on est en présence d'un piège à hydrocarbures catalysé.

Or, le traitement des hydrocarbures libérés par le piège ne peut être efficace que lorsque le catalyseur trifonctionnel est amorcé, c'est à dire lorsque la température du catalyseur a atteint une valeur dite d'amorçage, qui est définie par conception, et qui est supérieure à la température de re-largage du piège.

La température d'amorçage du catalyseur étant supérieure à la température de re-largage du piège, au cours de la montée en température des éléments de la ligne d'échappement, le piège commence à libérer les hydrocarbures stockés avant que le catalyseur n'ait atteint sa température d'amorçage.

Par conséquent, tant que le catalyseur n'a pas atteint sa température d'amorçage, les hydrocarbures libérés par le piège ne sont pas ou peu traités.

"Le document US-A-5.661.971 divulgue un procédé de traitement des gaz d'échappement d'un véhicule automobile qui comporte un catalyseur trifonctionnel qui est agencé dans une ligne d'échappement. Le procédé comporte notamment une étape de répartition de richesse qui consiste à produire, d'un cylindre à l'autre, des écarts de richesse entre les mélanges carburés, tout en maintenant la richesse moyenne des mélange carburés proche de la richesse stoechiométrique, de manière à augmenter les émissions de monoxyde de carbone et de dioxygène dans les gaz d'échappement du moteur, en vue de provoquer des réactions exothermiques dans le catalyseur.

Cependant, le procédé décrit dans ce document provoque un fort dégagement de monoxyde de carbone et d'hydrocarbure dans les gaz d'échappement tant que le catalyseur n'a pas atteint une température de seuil."

L'invention vise à remédier à cet inconvénient.

A cet effet, l'invention propose un procédé de traitement des gaz d'échappement du type décrit précédemment, caractérisé en ce qu'il comporte une étape de répartition de richesse qui est mise en oeuvre pendant la phase de montée en température du catalyseur pour accélérer cette montée en température, et qui consiste à produire, d'un cylindre à l'autre, des écarts de richesse entre les mélanges carburés, tout en maintenant la richesse moyenne des mélanges carburés proche de la richesse stoechiométrique, de manière à augmenter les émissions de monoxyde de carbone et de dioxygène dans les gaz d'échappement du moteur, en vue de provoquer des réactions exothermiques dans le catalyseur, "et en ce que l'étape de répartition de richesse (Er) est mise en oeuvre dès que le catalyseur (26) atteint une température minimale (Tmin) déterminée qui correspond à une efficacité minimale de traitement du monoxyde de carbone. "

Selon d'autres caractéristiques de l'invention :
- les écarts de richesse entre les mélanges carburés sont produits en pondérant la durée d'injection du carburant dans chaque cylindre par un coefficient déterminé ;
- l'étape de répartition de richesse est mise en oeuvre au moins jusqu'à ce que le piège à hydrocarbures atteigne une température dite d'amorçage, qui correspond à une efficacité minimale de traitement des hydrocarbures émis en amont ;
- l'étape de répartition de richesse est mise en oeuvre jusqu'à ce que le catalyseur atteigne une efficacité de traitement des hydrocarbures sensiblement égale à quatre-vingt-dix pourcents.

D'autres caractéristiques et avantages de l'invention apparaîtront à la lecture de la description détaillée qui suit pour la compréhension de laquelle on se reportera aux figures annexées parmi lesquelles :
- la figure 1 représente schématiquement un système de traitement des gaz d'échappement d'un moteur à combustion pour la mise en oeuvre du procédé selon l'invention ;
- la figure 2 est un diagramme schématique qui illustre, en fonction du temps, la montée en température du catalyseur et du piège à hydrocarbure du système d'échappement de la figure 1, lorsque l'on met en oeuvre le procédé selon l'invention ;
- la figure 3 est un diagramme schématique qui illustre, en fonction du temps, l'efficacité de traitement des hydrocarbures par le système de traitement de la figure 1.

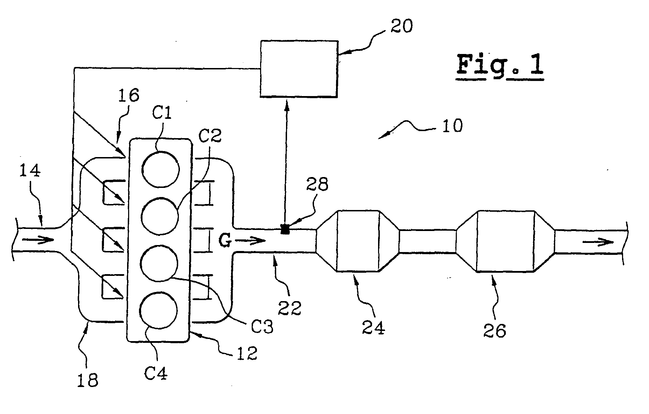

On a représenté sur la figure 1, un système de traitement 10 des gaz d'échappement G d'un moteur à combustion à essence 12 d'un véhicule automobile, pour la mise en oeuvre du procédé selon l'invention.

Le moteur 12 est alimenté en air frais par un conduit d'admission 14. Des injecteurs 16 peuvent être agencés dans des tronçons aval 18 du conduit d'admission 14, ou directement dans les chambres de combustion du moteur 12, de façon à fournir au moteur 12 la quantité de carburant nécessaire à son fonctionnement.

On a représenté ici un moteur 12 comportant quatre cylindres C1, C2, C3, C4. Bien entendu, l'invention s'applique aussi à des moteurs comportant un nombre de cylindres supérieur ou inférieur à quatre.

Une unité électronique de commande 20 permet de gérer le fonctionnement du moteur 12.

L'unité électronique 20 contrôle notamment les injecteurs 16 et l'admission d'air dans le conduit d'admission 14, de manière à introduire dans chaque cylindre C1, C2, C3, C4 un mélange carburé de richesse déterminée.

Une ligne d'échappement 22 permet l'évacuation des gaz G du moteur 12 issus de la combustion, vers l'atmosphère.

Un système de traitement destiné à purifier les gaz d'échappement G est interposé dans la ligne 22. Il comporte, respectivement agencés d'amont en aval, un piège à hydrocarbures 24 et un catalyseur trifonctionnel 26.

Des moyens de mesure, tels que des capteurs de pression et des capteurs de température (non représentés) peuvent être disposés sur la ligne d'échappement 22, en amont et en aval du piège 24 et du catalyseur 26, en vue de fournir des informations utiles à l'unité électronique 20 pour la commande du moteur 12.

Une sonde à oxygène, ou sonde lambda 28, est agencée dans la ligne d'échappement 22, en amont du piège 24. Cette sonde 28 permet à l'unité électronique 20 de déterminer si le mélange carburé introduit dans les cylindres C1, C2, C3, C4 est riche ou pauvre. L'unité électronique 20 exploite les informations fournies par la sonde 28 pour réguler la richesse du mélange carburé introduit dans les cylindre en vue de maintenir le coefficient d'air lambda, qui désigne le rapport entre la masse d'air admise et le besoin théorique en air pour une combustion stoechiométrique, dans un intervalle de valeurs appelé fenêtre catalytique.

La fenêtre catalytique détermine les valeurs du coefficient d'air lambda pour lesquelles l'efficacité de traitement des trois polluants que sont le monoxyde de carbone (CO), les hydrocarbures (HC), et les oxydes d'azote (NOx), par le catalyseur 26 est optimale.

Le piège 24 est prévu pour stocker les hydrocarbures contenus dans les gaz d'échappement G à la sortie du moteur 12 jusqu'à ce que le piège 24 atteigne une température déterminée par conception, dite température de re-largage Tr. Cette température de re-largage Tr est par exemple d'environ 200 degrés Celsius.

Lorsque le piège 24 atteint la température de re-largage Tr, il commence à libérer les hydrocarbures stockés, de sorte que ceux-ci sont évacués dans les gaz circulant dans la ligne d'échappement 22 vers le catalyseur 26, en vue d'y être traités.

Le catalyseur 26 est conçu notamment pour traiter par oxydation les hydrocarbures (HC) et le monoxyde de carbone (CO) contenus dans les gaz d'échappement G.

Le fonctionnement du catalyseur 26 comporte une phase de montée en température P_{mT} jusqu'à une température de seuil déterminée T₁₀₀, au-delà de laquelle le catalyseur 26 est en mesure de traiter efficacement la totalité, ou la quasi-totalité, des hydrocarbures émis en amont, c'est à dire que son efficacité de traitement des hydrocarbures est globalement de cent pourcents.

La température de seuil T₁₀₀ est par exemple de 400 degrés Celsius.

Tant que le catalyseur 26 n'a pas atteint sa température de seuil T₁₀₀, il n'est pas en mesure de traiter efficacement la totalité des hydrocarbures contenus dans les gaz d'échappement G, de sorte qu'une partie non négligeable de ceux-ci ne sont pas traités et sont rejetés dans l'atmosphère.

Pendant la phase de montée en température P_{mT}, le catalyseur 26 atteint une température minimale Tmin déterminée qui correspond à une efficacité minimale de traitement du monoxyde de carbone par le catalyseur 26. Cette température minimale est par exemple d'environ 150 degrés Celsius.

Lorsque le catalyseur 26 atteint la température minimale Tmin, on considère qu'il est en mesure de traiter efficacement la majorité du monoxyde de carbone contenu dans les gaz d'échappement G.

Pendant la phase de montée en température P_{mT,} après avoir atteint la température minimale Tmin, le catalyseur 26 atteint une température dite d'amorçage Ta, qui correspond à une efficacité minimale de traitement des hydrocarbures émis en amont.

Par conception, on choisit par exemple une température d'amorçage Ta qui correspond à une efficacité de traitement de cinquante pourcents. Cette température d'amorçage Ta est par exemple d'environ 300 degrés Celsius.

Le fonctionnement du système de traitement 10 des gaz d'échappement G selon le procédé de l'invention est le suivant.

Une étape dite de répartition de richesse Er est mise en oeuvre pendant la phase de montée en température P_{mT} du catalyseur 26, pour accélérer la montée en température du catalyseur 26, sans accélérer la montée en température du piège 24.

L'étape de répartition de richesse Er consiste à produire, d'un cylindre C1, C2, C3, C4 à l'autre, des écarts de richesse entre les mélanges carburés, tout en maintenant la richesse moyenne des mélanges carburés proche de la richesse stoechiométrique, c'est à dire en maintenant cette richesse moyenne à l'intérieur de la fenêtre catalytique.

Les écarts de richesse entre les mélanges carburés sont produits en pondérant la durée d'injection du carburant Di associée à chaque cylindre C1, C2, C3, C4 par un coefficient ki déterminé.

La durée Di non pondérée correspond à une durée d'injection de référence, c'est à dire la durée d'injection calculée ou cartographiée par l'unité électronique pour maintenir la richesse du mélange carburé associé dans la fenêtre catalytique, sans tenir compte de la mise en oeuvre de l'étape de répartition de richesse Er.

Dans le mode de réalisation représenté ici, l'unité électronique pondère respectivement la durée d'injection D1, D2, D3, D4 de chaque injecteur associé à un cylindre C1, C2, C3, C4 par les coefficients k1, k2, k3, k4, de manière à obtenir de nouvelles durées d'injection corrigées D1c, D2c, D3c, D4c.

Chaque durée d'injection corrigée Dic correspond à la durée d'injection de référence Di multipliée par le coefficient associé ki.

A titre d'exemple, on peut choisir les valeurs suivantes pour les coefficients ki :
k1 = 1,24
k2 = 0,92
k3 = 0,92
k4 = 0,92

Pour ces valeurs choisies des coefficients ki, on constate que la durée d'injection corrigée D1c, associée au cylindre C1, est plus longue que la durée d'injection de référence D1 correspondante, et on constate que, au contraire, les durées d'injection corrigées D2c, D3c, D4c correspondant aux cylindres C2, C3, C4 sont plus courtes que les durées d'injection de référence D2, D3, D4 correspondantes.

Par conséquent, le mélange carburé introduit dans le cylindre C1 a une richesse supérieure à 1, ce qui provoque une augmentation de la quantité de monoxyde de carbone dans les gaz d'échappement G à la sortie du moteur 12, et le mélange carburé introduit dans chacun des cylindres C2, C3, C4 a une richesse inférieure à 1, ce qui provoque une augmentation de la quantité de dioxygène dans les gaz d'échappement G à la sortie du moteur 12.

Le dioxygène et le monoxyde de carbone, produits par l'étape de répartition de richesse Er, traversent le piège à hydrocarbures 24 et ils parviennent jusqu'au catalyseur 26 dans lequel ils réagissent en provoquant des réactions exothermiques.

Ces réactions exothermiques provoquent alors une accélération de la montée en température du catalyseur 26, de sorte qu'il atteigne plus vite sa température de seuil T₁₀₀.

Avantageusement, l'étape de répartition de richesse Er est mise en oeuvre dès que le catalyseur 26 atteint la température minimale Tmin permettant un traitement d'efficacité minimale du monoxyde de carbone, de sorte que l'augmentation des quantités de monoxyde de carbone dans les gaz d'échappement G à la sortie du moteur 12, due à l'étape de répartition de richesse Er, puisse être traité par le catalyseur 26.

De plus, l'accélération de la montée en température du catalyseur 26 contribue à l'amélioration de l'efficacité de traitement du monoxyde de carbone par le catalyseur 26, de sorte que l'étape de répartition de richesse Er ne provoque pas une augmentation des émission de monoxyde de carbone dans l'atmosphère, malgré une augmentation du monoxyde de carbone à la sortie du moteur (12).

L'étape de répartition de richesse Er est mise en oeuvre au moins jusqu'à ce que le piège à hydrocarbures 24 atteigne sa température d'amorçage Ta, de sorte que la température atteinte par le catalyseur 26, au moment Tr du re-largage des hydrocarbures piégés, soit maximale, ce qui garantit une efficacité maximale du traitement des hydrocarbures par le catalyseur 26.

De préférence, l'étape de répartition de richesse Er est mise en oeuvre jusqu'à ce que le catalyseur 26 ait atteint une température T₉₀ à laquelle il peut traiter efficacement environ quatre-vingt-dix pourcents des hydrocarbures. Les dix pourcents d'efficacité restante sont atteints rapidement et « naturellement », c'est à dire sans répartition de richesse, grâce aux réactions exothermiques produites par le traitement du monoxyde de carbone émis en fonctionnement normal par le moteur 12.

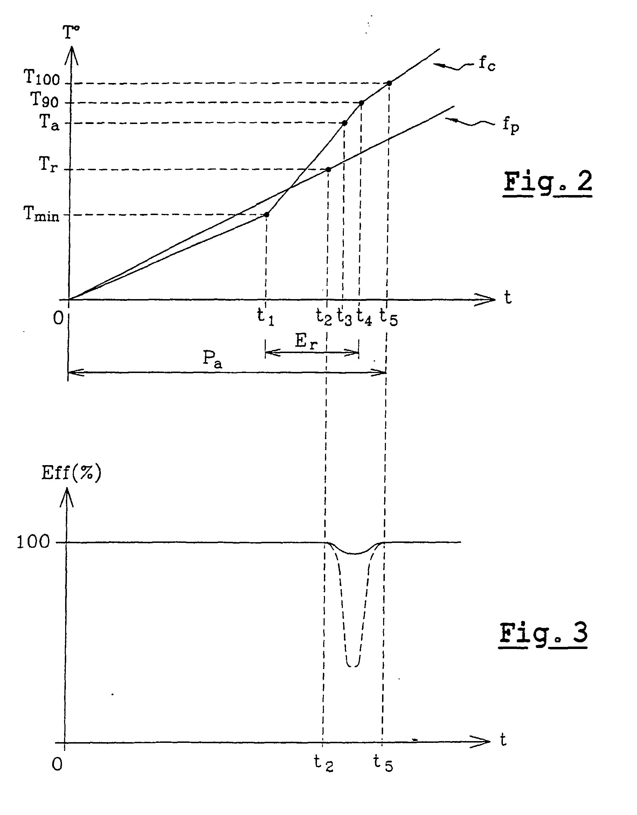

Le diagramme de la figure 2 représente schématiquement une courbe fc de montée en température du catalyseur 26 en fonction du temps, ainsi qu'une courbe fp de montée en température du piège à hydrocarbures 24 en fonction du temps.

Sur cette figure, on constate que, à l'instant t1 pendant la phase de montée en température P_{mT,} le catalyseur 26 atteint sa température minimale Tmin pour le traitement du monoxyde de carbone, de sorte que l'étape de répartition de richesse Er est déclenchée.

A l'instant t2, le piège 24 atteint sa température de re-largage Tr, de sorte qu'il commence à libérer des hydrocarbures qui étaient piégés.

A l'instant t3, le catalyseur 26 atteint sa température d'amorçage Ta, de sorte que son efficacité de traitement des hydrocarbures est d'au moins cinquante pourcents.

L'étape de répartition de richesse Er est mise en oeuvre jusqu'à l'instant t4, qui correspond à une température T₉₀ du catalyseur 26 pour laquelle le catalyseur 26 est en mesure de traiter environ quatre-vingt dix pourcents des hydrocarbures relargués par le piège 24.

Enfin, à l'instant t5, le catalyseur 26 atteint sa température de seuil T₁₀₀, de sorte que son efficacité de traitement des hydrocarbures est maximale et d'environ cent pourcents, ce qui entraîne la fin de la phase de montée en température P_{mT}.

On note que la température du catalyseur 26 peut continuer à augmenter après la température de seuil T₁₀₀.

Le diagramme, qui est représenté en parallèle sur la figure 3, illustre schématiquement l'évolution, au cours du temps, de l'efficacité Eff du traitement des hydrocarbures par le système de traitement 10 des gaz d'échappement G.

Jusqu'à l'instant t2, l'efficacité est de cent pourcents, puisque globalement tous les hydrocarbures sont stockés dans le piège 24.

A l'instant t2, lorsque le piège 24 atteint sa température de re-largage Tr, les hydrocarbures sont largués par le piège 24, dans les gaz en aval, et ils parviennent jusqu'au catalyseur 26 pour être traités.

Entre l'instant t2 du re-largage et l'instant t5 de fin de la phase de montée en température P_{mT,} il s'écoule une courte période pendant laquelle le catalyseur 26 est traversé par des gaz d'échappement contenant des hydrocarbures, bien qu'il n'ait pas atteint sa température de seuil T_{100,} de sorte que l'efficacité Eff de traitement des hydrocarbures diminue légèrement, ce qui est illustré par le petit creux dans la courbe de la figure 3.

Cette petite baisse d'efficacité est à comparer avec la baisse importante d'efficacité qui a été constatée pour un procédé de traitement ne comportant pas d'étape de répartition de richesse Er conforme à l'invention, et qui est illustrée par la portion de courbe en trait discontinu sur la figure 3.

Dès l'instant t5 de fin de la phase de montée en température P_{mT}, l'efficacité de traitement Eff revient à sa valeur maximale.

Selon une variante de réalisation (non représentée), l'invention s'applique à un système de traitement des gaz d'échappement G comportant un piège à hydrocarbures catalysé, c'est à dire un dispositif de traitement regroupant les fonctions de piège à hydrocarbures et de catalyseur.

## Revendications

1. Procédé de traitement des gaz d'échappement (G) d'un véhicule automobile comportant un moteur à combustion à essence (12) qui comporte plusieurs cylindres (C1, C2, C3, C4), et une ligne d'échappement (22) qui comporte, respectivement d'amont en aval, un piège à hydrocarbures (24) et un catalyseur (26) du type trifonctionnel, le procédé comportant une phase de montée en température (P_{mT}) du catalyseur (26) jusqu'à une température de seuil déterminée (T₁₀₀) au-delà de laquelle le catalyseur (26) est en mesure de traiter efficacement la totalité des hydrocarbures émis en amont,
**caractérisé en ce qu'**il comporte une étape de répartition de richesse (Er) qui est mise en oeuvre pendant la phase de montée en température (P_{mT}) du catalyseur (26) pour accélérer cette montée en température, et qui consiste à produire, d'un cylindre (C1, C2, C3, C4) à l'autre, des écarts de richesse entre les mélanges carburés, tout en maintenant la richesse moyenne des mélanges carburés proche de la richesse stoechiométrique, de manière à augmenter les émissions de monoxyde de carbone et de dioxygène dans les gaz d'échappement (G) du moteur (12), en vue de provoquer des réactions exothermiques dans le catalyseur (26),
et **en ce que** l'étape de répartition de richesse (Er) est mise en oeuvre dès que le catalyseur (26) atteint une température minimale (Tmin) déterminée qui correspond à une efficacité minimale de traitement du monoxyde de carbone.

2. Procédé selon la revendication précédente, **caractérisé en ce que** les écarts de richesse entre les mélanges carburés sont produits en pondérant la durée d'injection (Di) du carburant dans chaque cylindre (C1, C2, C3, C4) par un coefficient (ki) déterminé.

3. Procédé selon l'une quelconque des revendications précédentes, **caractérisé en ce que** l'étape de répartition de richesse (Er) est mise en oeuvre au moins jusqu'à ce que le piège à hydrocarbures (24) atteigne une température dite d'amorçage (Ta), qui correspond à une efficacité minimale de traitement des hydrocarbures émis en amont.

4. Procédé selon l'une quelconque des revendications 1 à 3, **caractérisé en ce que** l'étape de répartition de richesse (Er) est mise en oeuvre jusqu'à ce que le catalyseur (26) atteigne une efficacité de traitement des hydrocarbures sensiblement égale à quatre-vingt-dix pourcents.

## Claims

1. Method for treating the exhaust gases (G) of a motor vehicle comprising a gasoline combustion engine (12) which comprises a plurality of cylinders (C1, C2, C3, C4), and an exhaust line (22) which comprises, respectively from upstream to downstream, a hydrocarbon trap (24) and a trifunctional catalyst (26), the method comprising a temperature rise phase (P_{mT}) of the catalyst (26) up to a predefined threshold temperature (T₁₀₀) above which the catalyst (26) is capable of efficiently treating all the hydrocarbons emitted upstream,
**characterized in that** it comprises a fuel-air ratio distribution step (Er) which is implemented during the temperature rise phase (P_{mT}) of the catalyst (26) to accelerate the said temperature rise, and which consists in producing, from one cylinder (C1, C2, C3, C4) to the next, fuel-air ratio differences between the carburetted mixtures, while maintaining the average fuel-air ratio of the carburetted mixtures close to the stoichiometric fuel-air ratio, so as to increase the emissions of carbon monoxide and oxygen in the exhaust gases (G) of the engine (12), in order to generate exothermic reactions in the catalyst (26),
and **in that** the fuel-air ratio distribution step (Er) is implemented as soon as the catalyst (26) reaches a predefined minimum temperature (Tmin) which corresponds to a minimum carbon monoxide treatment efficiency.

2. Method according to the preceding claim, **characterized in that** the fuel-air ratio differences between the carburetted mixtures are produced by weighting the fuel injection time (Di) in each cylinder (C1, C2, C3, C4) by a predefined coefficient (ki).

3. Method according to any one of the preceding claims, **characterized in that** the fuel-air ratio distribution step (Er) is implemented at least until the hydrocarbon trap (24) reaches a temperature called the initiation temperature (Ta), which corresponds to a minimum efficiency of treatment of the hydrocarbons emitted upstream.

4. Method according to any one of Claims 1 to 3, **characterized in that** the fuel-air ratio distribution step (Er) is implemented until the catalyst (26) reaches a hydrocarbon treatment efficiency substantially equal to ninety percent.

## Patentansprüche

1. Verfahren zur Behandlung der Abgase (G) eines Kraftfahrzeugs mit einem Benzinmotor (12), der mehrere Zylinder (C1, C2, C3, C4) umfasst, und einer Auspuffleitung (22), die jeweils, von vorne nach hinten, eine Kohlenwasserstofffalle (24) und einen Dreiwegekatalysator (26) aufweist, wobei das Verfahren eine Temperaturanstiegsphase (P_{mT}) des Katalysators (26) auf eine bestimmte Schwellentemperatur (T₁₀₀) umfasst, über welche hinaus der Katalysator (26) in der Lage ist, die Gesamtheit der vorne emittierten Kohlenwasserstoffe wirksam zu behandeln,
**dadurch gekennzeichnet, dass** es einen Schritt der Fettheitsverteilung (Er) umfasst, der während der Temperaturanstiegsphase (P_{mT}) des Katalysators (26) durchgeführt wird, um diesen Temperaturanstieg zu beschleunigen, und der darin besteht, von einem Zylinder (C1, C2, C3, C4) zum anderen Fettheitsabweichungen zwischen den Luft-Kraftstoff-Gemischen zu erzeugen, wobei die durchschnittliche Fettheit der Luft-Kraftstoff-Gemische nahe an der stöchiometrischen Fettheit gehalten wird, wodurch die Kohlenmonoxid- und O₂-Emissionen im Abgas (G) des Motors (12) erhöht werden, um im Katalysator (26) exotherme Reaktionen zu bewirken,
und **dadurch**, dass der Schritt der Fettheitsverteilung (Er) durchgeführt wird, sobald der Katalysator (26) eine bestimmte Mindesttemperatur (Tmin) erreicht, die einer minimalen Behandlungsleistung des Kohlenmonoxids entspricht.

2. Verfahren nach dem vorherigen Anspruch, **dadurch gekennzeichnet, dass** die Fettheitsabweichungen zwischen den Luft-Kraftstoff-Gemischen erzeugt werden, indem die Einspritzdauer (Di) des Kraftstoffs in jedem Zylinder (C1, C2, C3, C4) durch einen bestimmten Koeffizienten (ki) gewichtet wird.

3. Verfahren nach einem der vorherigen Ansprüche, **dadurch gekennzeichnet, dass** der Schritt der Fettheitsverteilung (Er) mindestens durchgeführt wird, bis die Kohlenwasserstofffalle (24) eine sogenannte Aktivierungstemperatur (Ta) erreicht, die einer minimalen Behandlungsleistung der vorne emittierten Kohlenwasserstoffe entspricht.

4. Verfahren nach einem der Ansprüche 1 bis 3, **dadurch gekennzeichnet, dass** der Schritt der Fettheitsverteilung (Er) durchgeführt wird, bis der Katalysator (26) eine Behandlungsleistung der Kohlenwasserstoffe erreicht, die im Wesentlichen gleich neunzig Prozent ist.
